# EUROPEAN PATENT SPECIFICATION

(11) **EP 3 974 638 B1**
(45) Date of publication and mention of the grant of the patent: **07.01.2026**
(21) Application number: 21205808.5
(22) Date of filing: 05.09.2014
(51) Int. Cl.: F02D 41/00, F02D 13/06, F02D 41/14

(54) **THERMAL MANAGEMENT OF EXHAUST GAS VIA CYLINDER DEACTIVATION**
WÄRMEMANAGEMENT VON ABGAS MITTELS ZYLINDERABSCHALTUNG
GESTION THERMIQUE DE GAZ D'ÉCHAPPEMENT PAR LE BIAIS D'UNE DÉSACTIVATION DE CYLINDRE

(30) Priority: 06.09.2013 US 201361874868 P
(43) Date of publication of application: 30.03.2022
(62) Divisional of application: 14841820.5
(73) Proprietor: Cummins, Inc., Columbus, Indiana 47201 (US)
(72) Inventor: NORRIS, Colin, L., Columbus, 47201 (US); AFOLABI, Olusola, Columbus, 47201 (US); MEHROTRA, Abhishek, Columbus, 47201 (US); EDWARDS, Ward, R., Columbus, 47203 (US); LUTZ, Timothy, P., Columbus, 47203 (US); REYNOLDS, David, Joseph, Memphis, 47143 (US); BENTLEY, Gregory, Greenwood, 46143 (US); GOJE, Amit, Columbus, 47201 (US); RAMAMOORTHY, Balakrishnan, Columbus, 47201 (US); SINGH, Jagdeep, I., Columbus, 47201 (US)
(74) Representative: Marks & Clerk Cummins

(56) References cited:
- JP-A- 2010 216 285
- US-A1- 2001 015 065
- US-A1- 2002 170 527
- US-A1- 2003 089 330
- US-A1- 2005 022 509
- US-B1- 6 938 598

## Description

### CROSS-REFERENCE TO RELATED APPLICATIONS

This application claims the benefit of priority of United States Provisional Patent Application No. 61/874,868, filed September 6, 2013, entitled "THERMAL MANAGEMENT OF EXHAUST GAS VIA CYLINDER DEACTIVATION".

### BACKGROUND

Emissions regulations for internal combustion engines have become more stringent over recent years. For example, the Environmental Protection Agency of the United States has been phasing in stricter emissions standards regarding hydrocarbon, particulate matter, and nitrogen oxide emissions for the last few years and will continue to do so. Environmental concerns have motivated the implementation of these stricter emission requirements for internal combustion engines throughout much of the world.

Many engine manufacturers have developed extensive aftertreatment systems that work to 'clean-up' the exhaust gas emitted from combustion cylinders so that the constituents of the exhaust gas leaving the tailpipe of an engine system (e.g., a vehicle or a generator) comply with the emissions standards. Filters and catalysts have been implemented, for example, to trap particulate matter, oxidize hydrocarbons, and reduce nitrogen oxides. However, many of these aftertreatment components are highly temperature dependent such that they are much more effective when maintained at a certain temperature.

When the temperature of the aftertreatment system is too low, several negative consequences may occur. First, the general efficiency and effectiveness of the aftertreatment system will diminish and emissions from the tailpipe may contain excessive amounts of harmful pollutants. Additionally, these pollutants, before exiting the aftertreatment system, may adsorb onto the surface of the various components (the filters and catalysts), thus reducing the active and effective surface area of those components. For example, a reduction catalyst may become clogged with adsorbed hydrocarbons. The adsorption of pollutants onto the various components of an aftertreatment system not only decreases the effectiveness of the system, but the clogged components may require repeated 'regeneration' procedures that require extra time and fuel. For example, a user may have to wait, without using the engine for a desired purpose, while the regeneration process occurs. Still further, adsorbed pollutants on the aftertreatment components, such as hydrocarbons adsorbed on a selective reduction catalyst, may eventually and suddenly burn off when the temperature of the system rises, thus resulting in an exothermic chain reaction that causes drastic temperature increases that can potentially damage components of the system.

US2005022509 (FUKUSAKO TAKAAKI [JP], et al) relates to a controller for cylinder cut-off for multi-cylinder internal combustion engine. According to the abstract of this document there is a controller for cylinder cut-off for a multi-cylinder internal combustion engine including a partially operable cylinder that can be cutoff by a cut-off cylinder mechanism provided therewith and a full operating cylinder that is not cut off, the controller for cylinder cut-off including a partially operable cylinder side catalyst temperature estimating section, a full operating cylinder side catalyst temperature estimating section, and a cylinder cut-off authorization determining section for determining whether to authorize or prohibit a cut-off of the partially operable cylinder based on a partially operable cylinder side catalyst temperature estimated by the partially operable cylinder side catalyst temperature estimating section: and a full operating cylinder side catalyst temperature estimated by the full operating cylinder side catalyst temperature estimating section.

US2002170527 (RAYL ALLEN B [US], et al) relates to a method and apparatus for control of a variable displacement engine for fuel economy and performance. According to the abstract of this document there is provided an engine control system in a vehicle including a variable displacement internal combustion engine, an intake manifold coupled to the variable displacement internal combustion engine, a controller for controlling the displacement of the variable displacement internal combustion engine, a pressure sensor sensing manifold pressure, the pressure sensor electronically coupled to the controller, and where the controller receives pressure information from the pressure sensor and changes the displacement of the variable displacement internal combustion engine in response to the pressure information.

US6938598 (LEWIS DONALD J [US], et al) relates to starting an engine with electromechanical valves. According to the abstract of this document there is provided a system and method to control engine valve timing to during the start of an internal combustion engine. Electromechanical valves are controlled in a manner to reduce engine vibration and hydrocarbon emissions during the start of an internal combustion engine. The method controls valves without an explicit four-stroke engine cycle during a start. JP2010216285 (TOYOTA MOTOR CORP) relates to a control device for a multi-cylinder internal combustion engine. According to the abstract of this document there are provided exhaust manifolds which communicate with an A bank and a B bank forming the multi-cylinder internal combustion engine, respectively. The exhaust emission control catalysts are arranged in the exhaust manifolds, respectively. In the internal combustion engine, the reduced-number-of-cylinder operation in which fuel injection to a cylinder group forming the A bank is stopped and an operating state of the same is put in a resting state and all-cylinder operation in which fuel is injected to all cylinders is selectively performed based on an engine operating state. When the catalyst temperature Teat of the exhaust emission control catalysts is equal to or higher than a first predetermined temperature α, the all-cylinder operation is performed.

### SUMMARY

The subject matter of the present disclosure has been developed in response to the present state of the art. Accordingly, the subject matter of the present disclosure has been developed to provide a system and a method for thermal management of an exhaust gas aftertreatment system via cylinder deactivation based on an engine operating state and the time within which the engine has been in that operating state.

One embodiment relates to a system according to claim 1.

Another embodiment relates to a method of increasing the exhaust gas temperature based on an engine operating state existing for a predetermined amount of time according to claim 11.

The described features, structures, advantages, and/or characteristics of the subject matter of the present disclosure may be combined in any suitable manner in one or more embodiments and/or implementations. In the following description, numerous specific details are provided to impart a thorough understanding of embodiments of the subject matter of the present disclosure. One skilled in the relevant art will recognize that the subject matter of the present disclosure may be practiced without one or more of the specific features, details, components, materials, and/or methods of a particular embodiment or implementation. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims.

### BRIEF DESCRIPTION OF THE DRAWINGS

In order that the advantages of the subject matter may be more readily understood, a more particular description of the subject matter briefly described above will be rendered by reference to specific embodiments that are illustrated in the appended drawings. Understanding that these drawings depict only typical embodiments of the subject matter and are not therefore to be considered to be limiting of its scope, the subject matter will be described and explained with additional specificity and detail through the use of the drawings, in which:
FIG. 1 is a schematic block diagram of a controller apparatus for changing the temperature and hydrocarbon content of an exhaust gas stream, according to one embodiment;
FIG. 2 is a schematic block diagram of an engine system for changing the temperature and hydrocarbon content of an exhaust gas stream, according to one embodiment;
FIG. 3 is a schematic block diagram of an engine system for changing the temperature and hydrocarbon content of an exhaust gas stream, according to another embodiment;
FIG. 4 is a chart showing the temperature and hydrocarbon content of an exhaust gas stream, according to one embodiment; and
FIG. 5 is a schematic flow chart diagram of a method for changing the temperature and hydrocarbon content of an exhaust gas stream, according to another embodiment.

### DETAILED DESCRIPTION

Reference throughout this specification to features, advantages, or similar language does not imply that all of the features and advantages that may be realized with the subject matter of the present disclosure should be or are in any single embodiment of the subject matter. Rather, language referring to the features and advantages is understood to mean that a specific feature, advantage, or characteristic described in connection with an embodiment is included in at least one embodiment of the subject matter of the present disclosure. Thus, discussion of the features and advantages, and similar language, throughout this specification may, but do not necessarily, refer to the same embodiment.

As described above, conventional aftertreatment systems have been implemented with many engine systems to reform exhaust gas emitted from the combustion cylinders. However, when the temperature of the aftertreatment system falls below a certain threshold, the engine system is plagued with various problems, as discussed above. Specifically, the effectiveness of the aftertreatment system decreases, hydrocarbon pollutants adsorb and build-up on the surface of the aftertreatment components, and the potential for destructive exothermic chain reactions increases. These problems are most prevalent when the engine is running in light load operation, which results in a comparatively lower exhaust gas temperature. The present disclosure relates to a controller apparatus, a system, and a method for managing the temperature of the exhaust gas via cylinder deactivation/reactivation. Throughout the present disclosure, many details are included referring to *deactivating* combustion cylinders to increase exhaust gas temperature (see below). As used herein, when one or more combustion cylinders are deactivated, the engine is operating in a combustion cylinder deactivation mode.

Although not discussed in as much detail, the same general principles apply for *reactivating* the deactivated combustion cylinders. For example, if the demand placed on the engine exceeds what the engine with deactivated cylinders is able to generate, then the controller, system, and method of the present disclosure may also be implemented to reactivate the cylinders. At which point, the engine is operating in a normal operation mode (i.e., no combustion cylinder deactivations).

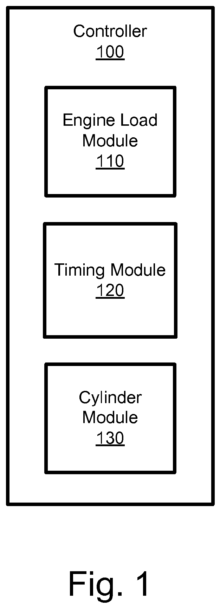

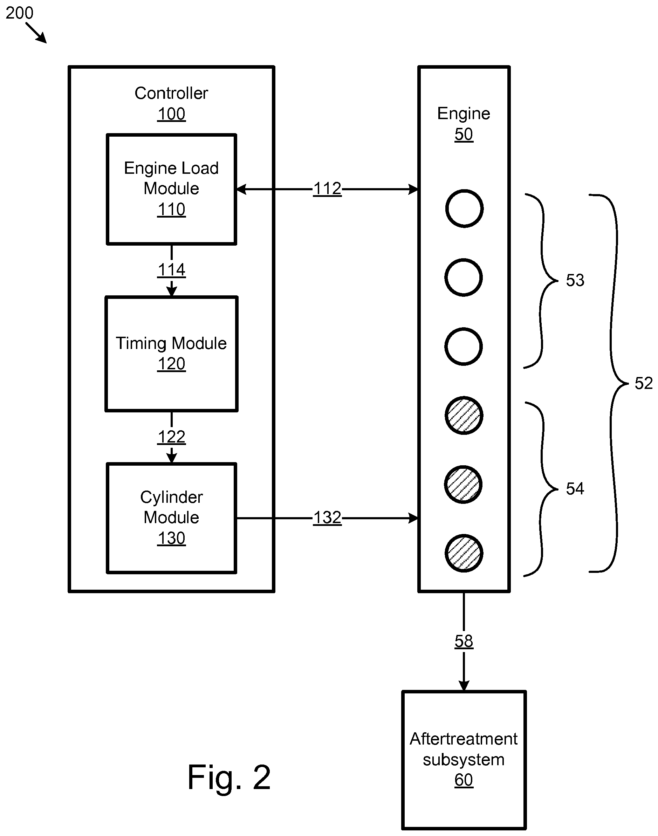

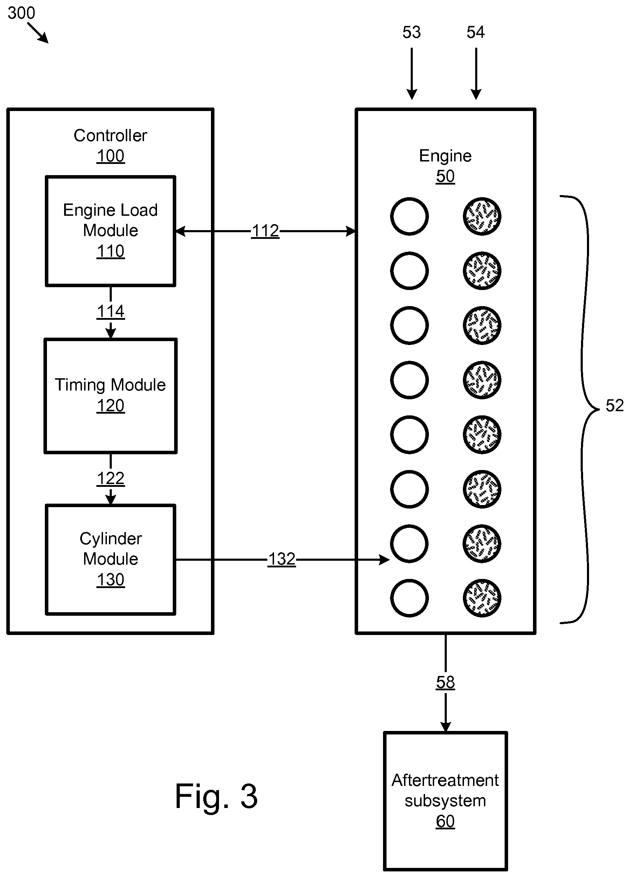

FIG. 1 is a schematic block diagram of a controller apparatus 100 for changing the temperature and hydrocarbon content of an exhaust gas stream, according to one embodiment. Generally speaking, the present disclosure relates to using engine cylinder deactivation to alter the thermal properties of the exhaust gas, thus diminishing the problems discussed above. Accordingly, the controller apparatus 100 includes an engine load module 110, a timing module 120, and a cylinder module 130. The engine load module 110 and the timing module 120 are described below with reference to FIG. 2 and the cylinder module 130 is described below with reference to FIGS. 2 and 3.

FIG. 2 is a schematic block diagram of an engine system 200 for changing the temperature and hydrocarbon content of an exhaust gas stream 58, according to one embodiment. The system 200 includes a controller 100, an engine 50 with a plurality of combustion cylinders 52, and an aftertreatment subsystem 60. The controller 100, as described above, includes an engine load module 110, a timing module 120, and a cylinder module 130. The engine 50 depicted in FIG. 2 is a six cylinder inline engine that has three active cylinders 53 and three deactivated cylinders 54. Although specific examples of certain engines are depicted in the Figures, the engine 50 of the present disclosure may be any internal combustion engine, such as a spark-ignited gasoline automobile engine, a diesel engine, a dual-fuel engine, a power generator engine, etc. The engine 50, according to one embodiment, has an even number of cylinders and the cylinders can be arranged in a line, as depicted in FIG. 2, or arranged in a v-formation (e.g., V-8, V-12, V-16, etc.), as depicted in FIG. 3. In other embodiments, the combustion cylinders in an internal combustion engine may be arranged in any type of configuration (e.g., a W-formation).

The aftertreatment subsystem 60 is structured to receive exhaust gas from the engine 50 and reduce the pollutants (e.g., nitrogen oxides, particulate matter, hydrocarbons, etc.) in the exhaust gas to thereby expel a relatively less pollutant exhaust gas into the environment. The aftertreatment subsystem 60 may include a variety of components. For example, the aftertreatment subsystem 60 may include a particulate filter, an oxidation catalyst, and a selective reduction catalyst, among other components. As described above, the activity and effectiveness of the various components are often highly dependent on temperature. At relatively higher temperatures (e.g., greater than 500 degrees Celsius), the following events tend to occur: ammonia, used to reduce nitrogen oxide (NOx) emissions to NO₂ and other less harmful products, is decomposed (e.g., burned off from the higher temperatures); NOx conversion to less harmful products, such as NO₂, increases; accumulated particulate matter is more likely to be regenerated (e.g., burned away); and the rate at which hydrocarbon, particulate matter, and/or water is collected or adsorbed by the system is reduced. At relatively lower exhaust gas temperatures (e.g., less than 250 degrees Celsius), ammonia is less likely to be decomposed; particulate matter, hydrocarbons, and water are more likely to collect within the system; and NOx conversion efficiency decreases. Thus, the successful and efficient conversion of harmful pollutants exiting the cylinders 52 of the engine 50 as exhaust gas 58 into non-toxic chemicals, such as water vapor, carbon dioxide, and nitrogen, is largely dependent on the temperature of the exhaust gas stream 58 itself. The modules 110, 120, 130 of the controller 100 are configured to control the exhaust gas temperature via cylinder deactivation.

The engine load module 110 interacts with the engine 50 to determine an engine operating state 112. The engine operating state 112 may include any information relating to the operating condition of the engine 50. For example, the engine load module 110 may interact with detectors and/or sensors to monitor the speed - revolutions-per-minute (RPM) - of the engine. In one embodiment, the engine load module 110 may also detect other operating variables, such as fuel rail pressure, charge flow, injection timing, etc. In another embodiment, the engine load module 110 may not use physical or actual measuring devices but may instead receive information from the main electronic control module of the engine. For example, torque demands, acceleration demands, torque limits, and other requests from the main electronics control module may be received by the engine load module 110 to determine the engine operating state 112. In a further embodiment, the engine load module 110 may be configured to continually and periodically take measurements or receive information. In another embodiment, the engine load module 110 may be configured to only monitor the engine conditions when a user has indicated such monitoring via a user interface.

The engine operating state 112 may include a low load operating condition of the engine 50. The low load operating condition may indicate that at least one of an engine torque and an engine speed (actual or demanded) are below a preset threshold. In another embodiment, the low load operating condition may indicate that the load on the engine itself (measured, determined, estimated, etc.) is below a preset threshold. Based on the engine used, the preset thresholds are likely to vary application-to-application. As mentioned above, values indicative of a low load operating state (e.g., engine speed, engine torque, load itself) may be measured, determined via one or more algorithms, processes, models, look-up tables, and/or otherwise estimated based on operation of the engine. In addition to engine torque, engine speed, and the load itself, other operating conditions may also be used to indicate that the engine is in a low load operating condition. In one embodiment, the gear or transmission setting may be used to indicate a low load operating state. For example, if the transmission setting is neutral, the engine load module 110 may determine that the engine is in a low load operating condition. In another embodiment - a vehicle embodiment, if the vehicle speed is below a preset threshold (e.g., 8 kilometers per hour (5 miles-per-hour)), the engine load module 110 may determine that the engine is in a low load operating condition. In still another embodiment, the engine load module 110 module may receive the fueling commands for the engine 50 and determine the engine is in a low load operating state based on the fueling commands. For example, if the fueling rate and/or amount are below a threshold. In still other embodiments, a combination of the aforementioned parameters (and others) may be used to determine that the engine is in a low load operating condition. For example, the speed of the engine 50, the injection timing, and the rate of fuel delivery into the combustion cylinders 52, may collectively indicate a low load operating condition. According to another embodiment, the engine load module 110 may indicate a 'low load' status 114 that is based solely on, for example, one parameter (e.g., when the engine is operating at lower than 700 RPM). Thus, many parameters may be used to indicate a low load operating condition with such designations being configurable based on the application. Accordingly, it should be also understood that many other parameters may also be used to indicate a low load operating condition.

In addition to a low load operating condition, the engine operating state 112 may also include 'medium' and/or 'high load' operating conditions (and any operating condition there between; thus, a spectrum may be used in some embodiments). Like the low load operating condition, the medium and/or high load operating conditions may be demarcated based on preset thresholds using one or more parameters like that described above. For example: engine speeds greater than 1,200 RPM may indicate a high load condition; engine torques between 339 Nm (250 pound-foots) and 542 Nm (400 pound-foots) may indicate a medium load condition; engine loads greater than 186kW (250 horsepower) may indicate a high load condition; etc. The values used above are for example purposes only. Based on the application, these values are likely to change such that many different thresholds may be used to indicate operating states of the engine 50.

The engine load module 110 is also structured to generate an engine status report 114 that is sent to the timing module 120 (described below). The engine status report 114 may include interpretations, analyses, and the like based on the engine operating state 112. Thus, the engine status report 114 describes a determination of the current load placed on the engine 50, whether actual or demanded. As described above, the description of the current load may be based on a variety of different parameters that, in some embodiments, are compared against preset thresholds indicative of an operating state, such as a low load operating state (e.g., the fueling rate/amount is below a threshold, the engine torque is below a threshold, etc.). The threshold designations may be based on the application and configurable (e.g., a user may set certain operating conditions that when experienced, indicate a certain operating state of the engine).

In certain other embodiments, the controller 100 may also include an aftertreatment condition module that functions in a similar manner as the engine load module 110. But, instead of receiving/detecting information about the operation of the engine (e.g., engine operating state 112), the aftertreatment condition module receives/detects information about the operation of the aftertreatment subsystem 60. For example, the aftertreatment module may monitor component surface temperatures, catalyst bed temperatures, fluid flow temperatures, etc. Based on the monitoring, the aftertreatment condition module may generate an aftertreatment status report, instead of an engine status report 114, which is sent to the timing module 120. If one or more of the temperatures are below a threshold for a certain amount of time, the controller 100 may generate a command to initiate a combustion cylinder deactivation mode (and, in some embodiments, provide one or more other thermal management commands) to increase the exhaust gas temperature. This structure and functionality is analogous to that of the engine load module 110, timing module 120, and cylinder module 130 but is instead focused on the aftertreatment system itself. The aftertreatment module, like described above, may be used to complement the function and structure of the controller 100 to aid efficient operation of the aftertreatment system. Accordingly, some embodiments may include this aftertreatment condition module while others may not.

The timing module 120 is structured to receive the engine status report 114 from the engine load module 110. Based on the engine status report 114, the timing module 120 generates a cylinder request 122 that is provided to the cylinder module 130. The timing module 120 is structured to determine when, if at all, cylinder activation/deactivation should be implemented (e.g., when combustion cylinder deactivation mode should be initiated). The timing module 120 monitors the period of time during which the engine 50 is operating under a certain status (i.e., in a certain state). For example, the engine status report 114 may indicate that the engine 50 is currently operating under a 'low load' condition. The timing module 120 receives such information and begins a timer to monitor how long the engine has been operating in such a condition. If the timing module 120 determines the engine 50 has been under a certain operating condition for a certain period of time, the timing module 120 may then generate a cylinder request 122 to be sent to the cylinder module 130.

In one embodiment, the cylinder request 122 calls for a portion 54 of the combustion cylinders 52 to be deactivated. The portion requested to be deactivated may be based on the engine configuration (e.g., inline, v-formation, etc.) and may be configurable. In one embodiment, a default deactivation strategy may be fifty percent of the combustion cylinders. For example, in a sixteen cylinder engine, the number of cylinders deactivated may be eight cylinders. In other embodiments, greater than or less than half of the combustion cylinders may be requested to be deactivated. In the sixteen cylinder engine, for example, two, four, six, eight, ten, etc., cylinders may be deactivated depending on the specifics of a given application.

The cylinder request 122 may be based upon a predetermined or a configurable timing variable. In other words, the timing module 120 may include predetermined timing parameters pertaining to each different operating status 114 of the engine 50. For example, if the status report 114 indicates that the engine is in 'low load' operation for a certain time period (as determined or timed by the timing module 120), the timing module 120 may then send a request 122 to the cylinder module 130 to deactivate a portion of the combustion cylinders. In one embodiment, the certain time period may be zero seconds. Thus, if the engine status report 114 indicates a certain condition (i.e., 'low load'), the timing module 120 may immediately request a portion of the cylinders to deactivate. In another embodiment, the certain time period may be greater than zero seconds, such as 30 seconds. In yet another embodiment, the certain time period may be a matter of minutes or longer (depending on the specific purpose/use of the engine). If the timing module 120 determines that a certain operating state (e.g., low load) has existed for that certain time period, the cylinder request 122 calls for a portion of the combustion cylinders to be deactivated.

In one embodiment, the certain time period may be configurable or programmable according to user input or may be application specific. For example, if a user is contemplating a situation where the engine will experience oscillating or constantly fluctuating demand, the user may set the time period for a longer time (e.g., thirty seconds) so as to not introduce cylinder deactivation prematurely (e.g., to avoid cylinder deactivation during transient events). In another embodiment, depending on the specific application of an engine, a technician may calibrate the timing module 120 to correspond with the dynamic conditions that the engine is expected to experience during the engine's operational lifetime. In yet another embodiment, the timing module may also take into consideration engine governors and secondary engine systems, such as upper and lower torque limits. For example, the timing module 120 may automatically and temporarily extend the certain time period to infinity (i.e., prevent cylinder deactivation) due to a low torque limit imposed upon the engine by a secondary engine system.

FIG. 3 is a schematic block diagram of an engine system 300 for changing the temperature and hydrocarbon content of an exhaust gas stream 58, according to another embodiment. As compared to FIG. 2, the engine 50 depicted in FIG. 3 is a V-16 engine and is shown with a portion/bank 53 of the cylinders 52 activated and another portion/bank 54 of the cylinders 52 deactivated. The cylinder module 130, as briefly mentioned above, receives a cylinder request 122 from the timing module 120. Generally, the cylinder request 122 indicates if/when cylinder deactivation/activation should take place. Once the cylinder module 130 receives a request 122 for cylinders to be deactivated, the cylinder module 130 generates a cylinder command 132 to implement the requested cylinder deactivation.

The cylinder command 132 includes additional thermal management commands. The additional thermal management commands are structured to complement the cylinder deactivation mode and increase a temperature of the exhaust gas. The additional thermal management commands may include, but are not limited to, a valve actuation command that alters the opening and closing of a fuel valve or the opening and closing of the intake and exhaust valves in an engine; retarding an injection timing to ensure a relatively greater amount of compression and therefore temperature in the cylinder; internal hydrocarbon dosing; external hydrocarbon dosing; post injection of fuel after the combustion event in the cylinder; a wastegate opening to control a speed of the turbocharger; closing an intake throttle; closing an exhaust throttle; adjusting a turbocharger to increase restriction across a turbine; adjusting a turbocharger to lower a speed of the turbocharger; increasing a speed of the engine; and the like. The additional thermal management commands may also include other actuation instructions, such as altering the pushrod and/or camshaft dynamics, in order to prevent fuel flow into the deactivated cylinders 54. As briefly stated above, the additional thermal management commands included with the cylinder command 132 may also include actuation instructions relating to the still-active cylinders 53 as well. For example, in order to maintain the power supply, the cylinder command 132 may call for an increase in fuel to be injected into the still active cylinders 53 or for the RPM rate to increase. Other parameters, including those mentioned above, may also be adjusted, such as injection timing, and fuel injection pressure to increase the exhaust gas temperature. It should be understood that the aforementioned list is not meant to be limiting as other commands may also be included that are structured to increase the temperature of the exhaust gas.

In one embodiment, the rate of fuel injected into the active cylinders 53 is increased relative to the rate that was provided in a time period immediately preceding the deactivation request (i.e., when no cylinders were deactivated). In one embodiment, the rate of fuel injected is double what was originally being provided during a time period immediately preceding the deactivation request where no combustion cylinders were deactivated in order to meet the power demand/load placed on the engine. The time period preceding the deactivation request may be predefined and configurable. To ensure that operation of the engine continues smoothly when entering a cylinder deactivation mode, the time period may be relatively short (e.g., one minute). In other embodiments, a distance period may be used in place of the time period (e.g., past one mile). In either configuration, the increase in fuel rate may correspond with the power output in the immediately preceding period. Thus, the power from the engine following the deactivation request may correspond with the power substantially needed right before the deactivation request. As such, when embodied in a vehicle, the operator may be relieved from feeling a change in operating conditions as the power output stays relatively constant. In another embodiment, the fueling rate may increase based on the number of cylinders deactivated relative to the total number of cylinders. For example, if fifty percent of cylinders are deactivated, the rate of fuel injected may double (i.e., (percent of cylinders deactivated) x 2); if forty percent of cylinders are deactivated, the fuel rate may be increased by eighty percent; etc. In this regard, the fuel rate injected is constant relative to the period immediately preceding the deactivation request. In another embodiment, the fuel rate may be adjusted to maintain the engine torque output relative to the engine torque output provided in the period immediately preceding the output request. An engine torque sensor may be utilized to ensure that fueling is increased until the current torque output from the engine reaches that of the period immediately preceding the request. The torque output from the preceding period may be an average experienced, a minimum, a median value, a maximum, and any other chosen parameter indicative of the torque of preceding period (e.g., most recently experienced prior to deactivation mode or most recently experienced torque level prior to the low load operating state being determined).

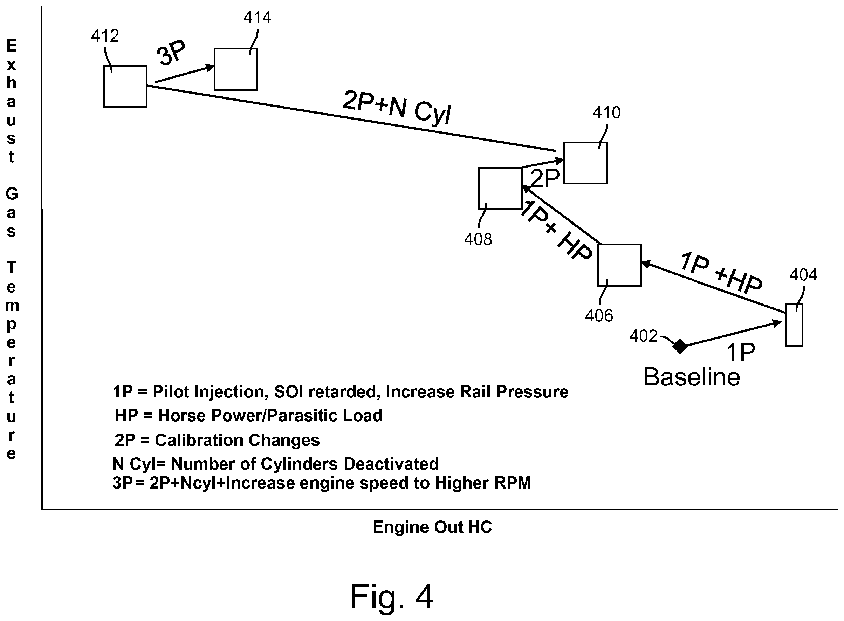

With a higher fuel injection rate in the still active cylinders 53, the temperature of the exhaust gas increases due to an increased chemical energy input (e.g., the fuel) that causes a higher power output with corresponding exhaust temperatures. This may result in the hydrocarbon content in the exhaust gas decreasing. In one embodiment, the decrease in the hydrocarbon content may be an indirect result caused by the increased temperature. In other words, as the temperature increases, any remaining hydrocarbons in the exhaust gas are oxidized, either in the combustion cylinders themselves or later in the exhaust conduits before reaching some of the aftertreatment components. FIG. 4 shows how the increased temperature decreases the hydrocarbon content in the exhaust gas stream 58.

In one embodiment, once the engine has been switched to a combustion cylinder deactivation mode, the cylinder module 130 may be configured to switch the referenced fuel table in a main electronic control module to a 'deactivated' cylinder fuel table. In one embodiment, there may be multiple fuel tables available for reference depending on the specifics of a given application and the details relating to the number of cylinders deactivated. Additionally, the cylinder module 130 may alternate which cylinders 52 are to be deactivated. For example, the cylinder module 130 may switch back and forth between which half of cylinders are deactivated each time a new cylinder request 122 is received from the timing module 120. In another embodiment, the cylinder module 130 may include a timing element of its own and may periodically and systematically switch the active cylinders without waiting for a request from the timing module 120. By switching/toggling the active bank of cylinders, the cylinders wear evenly, thus preventing any potential problems that may arise if one bank or one half of the cylinders is more frequently deactivated. As described above, the engine cylinders 52 may be in an inline configuration, a V configuration, or any other cylinder configuration (e.g., a W configuration). Accordingly, fuel tables corresponding with the active portion of combustion cylinders may be referenced by the cylinder module 130 to enable efficient operation of the engine.

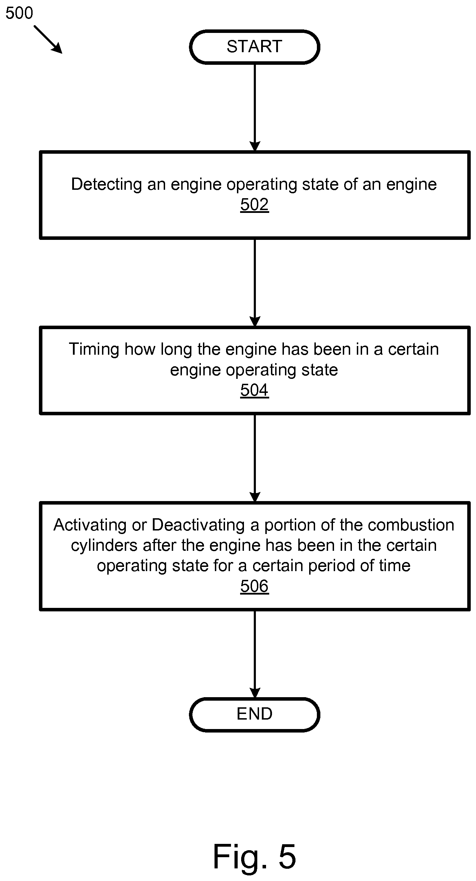

An example operation of the controller apparatus 100 may be described in regard to FIG. 5. As such, referring now to FIG. 5, FIG. 5 is a schematic flow diagram of a method 500 for changing the temperature an exhaust gas stream 58, according to one embodiment. Method 500 may be implemented with the controller 100 of FIGS. 1-3. Accordingly, method 500 may be explained with regard to the modules of the controller 100. To aid explanation of method 500, certain processes of method 500 may further be explained in regard to FIG. 4. FIG. 4 is a chart showing the temperature and hydrocarbon content of an exhaust gas stream 58 from an internal combustion engine, according to one embodiment.

At process 502, an engine operating state is detected. The engine operating state may correspond with a load experienced by the engine. In some embodiments, the operating state may include, but is not limited to, a low load operating condition, a medium load operation condition, and a high load operating condition. In other embodiments, a spectrum may be used that represents a gamut of for loads experienced by the engine. As described above, the operating state may be determined based on one or more operating parameters (e.g., engine torque, engine load (determined, measured, estimated, etc.), engine speed, fueling commands, etc.). The determined, measured, and/or estimated operating parameters may be compared against preset thresholds indicative of each operating state for the engine. In the example of FIG. 4, the engine load module 110 determines that the engine is operating in a low load condition. In FIG. 4, the low load operating condition is shown as baseline point 402.

After the operating state has been determined, at process 504, it is timed how long the engine has been in that operating state. This is performed by the timing module 120. In regard to FIG. 4, the timing module 120 has determined that the low load operating state has been present for a certain period of time (e.g., thirty seconds). Accordingly, at process 506, activating or deactivating a portion of combustion cylinders of the engine after the engine has been in the certain operating state for a certain period of time occurs. In regard to the example in FIG. 4, a low load operating state has been detected and has been occurring for a certain period of time. Because a low load operating state exists, at process 506, a portion of the combustion cylinders is deactivated ("N cylinders" as indicated by point 410 on FIG. 4). By deactivating a portion of combustion cylinders at the light or low load condition, the remaining (i.e., activated) cylinders are required to 'work' harder to maintain a similar power output. This may include increasing a fueling rate, a torque, a speed, etc. In turn, due to the extra 'work', the combustion temperatures increase which leads to an increase in an exhaust gas temperature. In some embodiments, the exhaust valve of the deactivated cylinders is also closed to prevent ambient air from mixing with the now-heated exhaust gas. Therefore, higher exhaust temperatures are achieved, which reduces particulate matter accumulation, NOx conversion inefficiency, and other potential harmful effects on the exhaust aftertreatment system.

In certain embodiments, switching of the activated/deactivated portion of the combustion cylinders may also occur during process 506, which corresponds with the cylinder deactivation mode. In turn, combustion cylinder wear may be spread relatively evenly amongst all the combustion cylinders. In one embodiment, switching is based on a time duration (e.g., every five seconds). As mentioned above, switching may also be based on when each cylinder request 122 is received, such that each request switches the combustion cylinders between activated and deactivated. Although only two switching strategies are described above, it should be understood that many switching strategies are possible.

Finally, a return to a normal operating mode (e.g., disengagement of the cylinder deactivation mode) may be based on a variety of parameters. This step may be included as part of process 506. One parameter may include a time duration. For example, there may be preprogrammed times for how long cylinder deactivation mode can last (e.g., ten minutes). Another parameter may be a change in operating conditions. For example, the engine load module 110 may continuously measure, estimate, or otherwise determine the load on the engine. If the load (or other parameter, such as fueling rate) indicates that a low load operating state is no longer present, the cylinder request 122 may be to return to normal operating mode because the exhaust gas temperatures may be likely or will be likely sufficient to prevent accumulation of particulate matter and other harmful effects that occur during low temperature exhaust gas situations. Still another parameter may be temperature measurements made in the exhaust gas aftertreatment system. In this embodiment, cylinder deactivation mode may continue until the temperature reaches a certain threshold. Although described as independent, these parameters may be also examined collectively. For example, the cylinder request 122 may be to continue cylinder deactivation mode until the temperature measurement in the exhaust gas reaches a certain threshold or the engine is no longer in a low load operating state, whichever occurs first. Thus, many parameters may be used to designate a return to normal operating mode.

Accordingly, referring back to FIG. 4, FIG. 4 depicts various stages or points in a deactivation procedure and the corresponding change in temperature (y-axis) and hydrocarbon content (x-axis). As mentioned above, at 402, the timing module 120 determines that the low load operating state has been occurring for a certain period of time. The timing module 120 provides a request to begin a combustion cylinder deactivation mode. The request is received by the cylinder module 130. In the example of FIG. 4, the cylinder module 130 has also provided additional thermal management commands at points 404-408. Additional thermal management commands may be provided to increase the exhaust gas temperatures. In some embodiments, cylinder deactivation mode may be activated immediately following the determination that a certain engine operating state has existed for a certain amount of time (i.e., process 504-506). In the example of FIG. 4, additional thermal management commands are included in the thermal management strategy in order to further increase the exhaust gas temperatures to promote (among other characteristics) efficient operation of the exhaust gas aftertreatment system. As shown, these commands include retarding injection timing, increasing the rail pressure (this applies to a common rail engine that use one rail to supply fuel to a plurality of injectors), and commanding post and pilot injections.

At point 410, the controller changes the engine calibration, which indicates that the fuel tables and any other commands (e.g., closing of deactivated combustion cylinder intake valves) are implemented (or are in the process of being implemented) to begin the cylinder deactivation mode. These commands correspond with commands to run the cylinder deactivation mode (e.g., an increase or decrease to a common rail pressure). In FIG. 4, cylinder deactivation mode is occurring from points 410-414. During cylinder deactivation mode, a portion of the combustion cylinders is deactivated (e.g., N cylinders). This portion may correspond with the engine type (e.g., 3 cylinders in a 6 cylinder engine). This portion may otherwise be a preset designation. In this example, engine speed is also increased to maintain power output and increase exhaust gas temperatures. The increase in power output is indicated in FIG. 4 by the "+ HP" (i.e., horsepower) designation. The increase in engine power output may be at least partly caused by the additional thermal management commands. As a result, the power output is increased relative to the starting low load in order to further help to increase exhaust gas temperatures (i.e., increasing power output increases engine torque, which increases fueling and combustion temperatures, which increases exhaust temperatures).

As shown in FIG. 4, increasing the exhaust gas temperature leads to a lower production of engine out hydrocarbons. This results in a relatively lesser amount of accumulation of hydrocarbons and other particulate matter in the exhaust gas aftertreatment system thereby leading to relatively more efficient operation of the aftertreatment system.

As mentioned above, at point 410, cylinder deactivation mode is commanded by the cylinder module 130. Point 410 corresponds with a particular exhaust gas temperature threshold on the y-axis. This exhaust gas temperature threshold may correspond with when cylinder deactivation mode is initiated after a certain engine operating condition (e.g., low load) has been detected for a certain amount of time. The exhaust gas temperature threshold may be preset based on the application (e.g., engine-aftertreatment system) and/or estimated/predicted/modeled using one or more look up tables, formulas, algorithms, and the like based on one or more pieces of engine operation data (e.g., fuel type, engine speed, engine torque, fuel-to-air ratio, etc.). In other embodiments, the exhaust gas temperature threshold may be determined in real time based on one or more engine parameters (e.g., below a temperature that causes or is likely to cause engine knock). Upon reaching this threshold, cylinder deactivation mode may be initiated by module 130. As mentioned above, the exhaust gas temperature threshold may vary for any engine-exhaust gas aftertreatment system combination, such that many temperature thresholds are possible based on the application.

According to one embodiment, thermal management commands are provided until the exhaust gas temperature threshold is reached (point 410 in FIG. 4). According to the herein claimed invention, the additional thermal management commands is provided for a certain period of time (e.g., a preset amount of time such as thirty seconds) prior to implementation of the cylinder deactivation mode. In still other embodiments, the additional thermal management commands may be provided until a threshold engine output power is reached. As such, the extent to which the additional thermal management commands are provided prior to activation of the cylinder deactivation mode is highly configurable. Moreover, in certain embodiments, the additional thermal management commands may continue to be provided during the cylinder deactivation mode.

As mentioned above, according to various other embodiments, cylinder deactivation mode may be initiated immediately after determining that a certain engine operating condition exists for a certain amount of time. In these instances, no threshold engine exhaust gas temperature preset may be used. As such, any additional thermal management commands may be used to increase the rate at which the exhaust gas temperatures rise without regard to an exhaust gas temperature threshold.

It should be understood that FIG. 4 represents a specific example implementation for the controller 100 and method 500. In some embodiments, more, less, or no additional thermal management commands may be utilized. Similarly, the designation of a low load operating state may also differ. Accordingly, many implementations of the controller 100 are possible.

In the above description, certain terms may be used such as "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

Reference throughout this specification to "one embodiment," "an embodiment," or similar language means that a particular feature, structure, or characteristic described in connection with the embodiment is included in at least one embodiment of the subject matter of the present disclosure. Appearances of the phrases "in one embodiment," "in an embodiment," and similar language throughout this specification may, but do not necessarily, all refer to the same embodiment. Similarly, the use of the term "implementation" means an implementation having a particular feature, structure, or characteristic described in connection with one or more embodiments of the subject matter of the present disclosure, however, absent an express correlation to indicate otherwise, an implementation may be associated with one or more embodiments.

The schematic flow chart diagrams included herein are generally set forth as logical flow chart diagrams. As such, the depicted order and labeled steps are indicative of one embodiment of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of computer readable program code may, for instance, comprise one or more physical or logical blocks of computer instructions which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of computer readable program code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. Where a module or portions of a module are implemented in software, the computer readable program code may be stored and/or propagated on in one or more computer readable medium(s).

The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including but not limited to wireless, wireline, optical fiber cable, Radio Frequency (RF), or the like, or any suitable combination of the foregoing

In one embodiment, the computer readable medium may comprise a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The computer readable program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The scope of the invention is defined by the appended claims.

## Claims

1. A system, comprising:
a controller coupled to an exhaust gas aftertreatment system fluidly connected to a plurality of combustion cylinders (52) of an engine, wherein the controller is structured to:
determine that the engine (50) is operating in a low load operating condition for a certain period of time, greater than zero seconds;
provide a thermal management command to the engine to increase the exhaust gas temperature, the thermal management command comprising at least one of retarding injection timing and hydrocarbon dosing;
deactivate a portion of the combustion cylinders (52) based on the determination that the engine is operating in the low load operating condition for the certain period of time, wherein the thermal management command is provided prior to deactivating the portion of the combustion cylinders; and
reactivate the deactivated portion of the combustion cylinders (52) in response to the engine (50) operating with a load greater than a preset threshold or a temperature of the exhaust gas reaching an exhaust gas temperature threshold, whichever occurs first.

2. The system of claim 1, wherein the low load operating condition is based on at least one of an engine torque or an engine speed being below a preset threshold.

3. The system of claim 1, wherein the controller is structured to increase a fuel injection rate to only an activated portion of the combustion cylinders (52), wherein the increase in the fuel injection rate is such that an engine torque output remains constant from a time period immediately preceding a deactivation request where no combustion cylinders (52) were deactivated.

4. The system of claim 1, wherein the controller is further structured to control switching between activated and deactivated combustion cylinders (53, 54) during combustion cylinder deactivation to manage wear of the combustion cylinders.

5. The system of claim 4, wherein the switching is based on a predefined time duration.

6. The system of claim 1, wherein the controller is structured to increase the exhaust gas temperature while the portion of the combustion cylinders are deactivated via the closing of both intake and the exhaust valves to prevent ambient air from mixing with the heated exhaust air to reduce particulate matter accumulation.

7. The system of claim 1, wherein the controller is further structured to deactivate the portion of the combustion cylinders (52) such that an amount of accumulation of hydrocarbons or other particulate matter in the exhaust gas aftertreatment system is reduced.

8. The system of claim 1, wherein the controller is structured to increase the exhaust gas temperature while the portion of the combustion cylinders (52) are deactivated via at least one thermal management command, wherein increasing the engine exhaust gas temperature is configured to decrease nitrogen oxide conversion inefficiency by the exhaust gas aftertreatment system.

9. The system of claim 1, wherein the controller is further structured to deactivate the portion of the combustion cylinders (52) to reduce or manage water collected or adsorbed by the exhaust gas aftertreatment system.

10. The system of claim 1, wherein the plurality of combustion cylinders (52) are arranged in a v-formation, wherein during deactivation, the controller is structured to deactivate a bank of combustion cylinders (53) for a certain period of time.

11. A method (500) comprising operating the system according to any of claims 1 to 10 to change the temperature of an exhaust gas stream.

12. The method of claim 11, wherein the low load operating condition is based on a load on the engine (50) being below a preset threshold.

13. The method of claim 11, further comprising increasing a fuel injection rate to only an activated portion of the combustion cylinders (54), wherein the increase in the fuel injection rate is double a rate that was provided during a time period immediately preceding the deactivation where no combustion cylinders (52) were deactivated.

## Patentansprüche

1. System, umfassend:
eine Steuereinheit, die mit einem Abgasnachbehandlungssystem gekoppelt ist, welches fluidisch mit einer Vielzahl von Verbrennungszylindern (52) eines Motors verbunden ist, wobei die Steuereinheit strukturiert ist, um:
zu bestimmen, dass der Motor (50) über einen bestimmten Zeitraum in einem niederlastigen Betriebszustand arbeitet, der größer als null Sekunden ist;
dem Motor einen Wärmeverwaltungsbefehl bereitzustellen, um die Abgastemperatur zu erhöhen, wobei der Wärmeverwaltungsbefehl mindestens eines von einer Verzögerung eines Einspritzzeitpunkts und Kohlenwasserstoffdosierung umfasst;
einen Teil der Verbrennungszylinder (52) basierend auf der Bestimmung zu deaktivieren, dass der Motor über einen bestimmten Zeitraum in einem niederlastigen Betriebszustand arbeitet, wobei der Wärmeverwaltungsbefehl vor dem Deaktivieren des Teils der Verbrennungszylinder bereitgestellt wird; und
den deaktivierten Teil der Verbrennungszylinder (52) als Reaktion darauf wieder zu aktivieren, dass der Motor (50), je nachdem, was zuerst auftritt, mit einer Last, welche größer als ein vorgegebener Schwellenwert ist, oder einer Temperatur des Abgases arbeitet, welche einen Abgastemperaturschwellenwert erreicht.

2. System nach Anspruch 1, wobei der niederlastige Betriebszustand auf mindestens einem von einem Motordrehmoment oder einer Motordrehzahl basiert, die einen vorgegebenen Schwellenwert unterschreitet.

3. System nach Anspruch 1, wobei die Steuereinheit strukturiert ist, um eine Brennstoffinjektionsrate in nur einen aktivierten Teil des Verbrennungszylinders (52) zu erhöhen, wobei die Erhöhung der Brennstoffinjektionsrate erfolgt, sodass eine Motordrehmomentabgabe ab einem Zeitraum unmittelbar vor einer Deaktivierungsanforderung, in dem keine Verbrennungszylinder (52) deaktiviert waren, konstant bleibt.

4. System nach Anspruch 1, wobei die Steuereinheit weiter strukturiert ist, um Umschalten zwischen aktivierten und deaktivierten Verbrennungszylindern (53, 54) während einer Verbrennungszylinderdeaktivierung zu steuern, um Abnutzung der Verbrennungszylinder zu verwalten.

5. System nach Anspruch 4, wobei das Umschalten auf einer vorgegebenen Zeitdauer basiert.

6. System nach Anspruch 1, wobei die Steuereinheit strukturiert ist, um die Abgastemperatur,
während der Teil der Verbrennungszylinder deaktiviert ist, durch Schließen von beiden, der Einlass- und der Abgasdrossel zu erhöhen, um zu verhindern, dass sich Umgebungsluft mit der erwärmten Abluft vermischt, um die Anhäufung von Partikeln zu reduzieren.

7. System nach Anspruch 1, wobei die Steuereinheit weiter strukturiert ist, um den Teil der Verbrennungszylinder (52) zu deaktivieren, sodass eine Anhäufungsmenge an Kohlenwasserstoffen oder anderen Partikeln im Abgasnachbehandlungssystem reduziert wird.

8. System nach Anspruch 1, wobei die Steuereinheit strukturiert ist, um die Abgastemperatur, während der Teil der Verbrennungsylinder (52) deaktiviert ist, über mindestens einen Wärmeverwaltungsbefehl zu erhöhen, wobei Erhöhen der Motorabgastemperatur konfiguriert ist, um Stickoxidumwandlungsineffizienz durch das Abgasnachbehandlungssystem zu senken.

9. System nach Anspruch 1, wobei die Steuereinheit weiter strukturiert ist, um den Teil der Verbrennungszylinder (52) zu deaktivieren, um vom Abgasnachbehandlungssystem gesammeltes oder adsorbiertes Wasser zu reduzieren oder zu verwalten.

10. System nach Anspruch 1, wobei die Vielzahl von Verbrennungszylindern (52) in einer v-Anordnung angeordnet ist, wobei, während eines Deaktivierungsmodus, die Steuereinheit strukturiert ist, um eine Verbrennungszylinderbank (53) über einen bestimmten Zeitraum zu deaktivieren.

11. Verfahren (500), umfassend das Betreiben des Systems nach einem der Ansprüche 1 bis 10 zum Ändern der Temperatur eines Abgasstroms.

12. Verfahren nach Anspruch 11, wobei der niederlastige Betriebszustand auf einer Last
an dem Motor (50) basiert, der einen vorgegebenen Schwellenwert unterschreitet.

13. Verfahren nach Anspruch 11, weiter umfassend Erhöhen einer Brennstoffinjektionsrate in nur einen aktivierten Teil der Verbrennungszylinder (54), wobei die Erhöhung der Brennstoffinjektionsrate das Doppelte einer Rate beträgt, welche während eines Zeitraums unmittelbar vor der Deaktivierung bereitgestellt wurde, in dem keine Verbrennungszylinder (52) deaktiviert waren.

## Revendications

1. Système, comprenant :
un dispositif de commande couplé à un système de post-traitement de gaz d'échappement connecté fluidiquement à une pluralité de cylindres de combustion (52) d'un moteur, dans lequel le dispositif de commande est structuré pour :
déterminer que le moteur (50) fonctionne dans une condition de fonctionnement à charge faible pendant une certaine période temporelle, supérieure à zéro seconde ;
fournir une commande de gestion thermique au moteur pour augmenter la température de gaz d'échappement, la commande de gestion thermique comprenant au moins une commande parmi le retard d'une temporisation d'injection et un dosage d'hydrocarbures ;
désactiver une partie des cylindres de combustion (52) sur la base de la détermination que le moteur fonctionne dans la condition de fonctionnement à charge faible pendant la certaine période temporelle, dans lequel la commande de gestion thermique est fournie avant la désactivation de la partie des cylindres de combustion ; et
réactiver la partie désactivée des cylindres de combustion (52) en réponse au moteur (50) fonctionnant avec une charge supérieure à un seuil prédéfini ou à une température du gaz d'échappement atteignant un seuil de température de gaz d'échappement, selon le premier de ces événements.

2. Système selon la revendication 1, dans lequel la condition de fonctionnement à charge faible est basée sur au moins l'un parmi un couple moteur ou une vitesse de moteur étant inférieur(e) à un seuil prédéfini.

3. Système selon la revendication 1, dans lequel le dispositif de commande est structuré pour augmenter un débit d'injection de carburant sur seulement une partie activée des cylindres de combustion (52), dans lequel l'augmentation du débit d'injection de carburant est telle qu'une sortie de couple moteur reste constante à partir d'une période temporelle qui précède immédiatement une requête de désactivation et pendant laquelle aucun cylindre de combustion (52) n'a été désactivé.

4. Système selon la revendication 1, dans lequel le dispositif de commande est en outre structuré pour commander la commutation entre l'activation et la désactivation des cylindres de combustion (53, 54) pendant la désactivation de cylindres de combustion pour gérer l'usure des cylindres de combustion.

5. Système selon la revendication 4, dans lequel la commutation est basée sur une durée temporelle prédéfinie.

6. Système selon la revendication 1, dans lequel le dispositif de commande est structuré pour augmenter la température
de gaz d'échappement pendant que la partie des cylindres de combustion est désactivée par l'intermédiaire de la fermeture à la fois des soupapes d'admission et d'échappement pour empêcher l'air ambiant de se mélanger avec l'air d'échappement chauffé pour réduire l'accumulation de matière particulaire.

7. Système selon la revendication 1, dans lequel le dispositif de commande est en outre structuré pour désactiver la partie des cylindres de combustion (52) de sorte qu'une quantité d'accumulation d'hydrocarbures ou d'autre matière particulaire dans le système de post-traitement de gaz d'échappement soit réduite.

8. Système selon la revendication 1, dans lequel le dispositif de commande est structuré pour augmenter la température de gaz d'échappement pendant que la partie des cylindres de combustion (52) est désactivée par l'intermédiaire d'au moins une commande de gestion thermique, dans lequel l'augmentation de la température de gaz d'échappement de moteur est configurée pour réduire l'inefficacité de conversion d'oxyde d'azote par le système de post-traitement de gaz d'échappement.

9. Système selon la revendication 1, dans lequel le dispositif de commande est en outre structuré pour désactiver la partie des cylindres de combustion (52) pour réduire ou gérer de l'eau recueillie ou adsorbée par le système de post-traitement de gaz d'échappement.

10. Système selon la revendication 1, dans lequel la pluralité de cylindres de combustion (52) sont agencés dans une formation en v, dans lequel, pendant une désactivation, le dispositif de commande est structuré pour désactiver une rangée de cylindres de combustion (53) pendant une certaine période temporelle.

11. Procédé (500) comprenant le fonctionnement du système selon l'une quelconque des revendications 1 à 10 pour modifier la température d'un flux de gaz d'échappement.

12. Procédé selon la revendication 11, dans lequel la condition de fonctionnement à faible charge repose sur une charge
appliquée sur le moteur (50) étant inférieure à un seuil prédéfini.

13. Procédé selon la revendication 11, comprenant en outre l'augmentation d'un débit d'injection de carburant sur seulement une partie activée des cylindres de combustion (54), dans lequel l'augmentation du débit d'injection de carburant est le double d'un débit qui a été assuré pendant une période temporelle qui précède immédiatement la requête de désactivation et pendant laquelle aucun cylindre de combustion (52) n'a été désactivé.
